# EUROPÄISCHE PATENTSCHRIFT

(11) **EP 1 142 805 B1**
(45) Veröffentlichungstag und Bekanntmachung des Hinweises auf die Patenterteilung: **28.05.2003**
(21) Anmeldenummer: 01102895.8
(22) Anmeldetag: 15.02.2001
(51) Int. Cl.: B65G 15/60

(54) **Fördereinrichtung**
Conveying device
Dispositif de transport

(30) Priorität: 06.04.2000 DE 10017159
(43) Veröffentlichungstag der Anmeldung: 10.10.2001
(73) Patentinhaber: PARSYS Produktionstechnik GmbH, 41061 Mönchengladbach (DE)
(72) Erfinder: Gesche, Günter, 41069 Mönchengladbach (DE)

(56) Entgegenhaltungen:
- DE-U- 29 701 963
- GB-A- 1 500 909

## Beschreibung

Die Erfindung betrifft eine Fördereinrichtung gemäß dem Oberbegriff des Anspruches 1.

Derartige Fördereinrichtungen sind in verschiedenen Ausführungsformen seit langem bekannt.

Das heißt, im Zusammenhang mit dem Transport von Gütern, sowohl Schütt- als auch Stückgütern, ist der Einsatz von Transportbändern beziehungsweise der Einsatz von Transportgurten durchaus üblich.

Diese in der Regel endlos umlaufenden Transportmittel sind endseitig über Antriebs- beziehungsweise Umlenkrollen geführt und auf ihrem dazwischenliegenden Streckenbereich durch rotierbare Tragrollen oder durchgängige, stationäre Auflagen abgestützt.

Die Unterstützung eines Transportgurtes mittels rotierbarer Tragrollen ist nicht nur relativ kostenintensiv, sondern, insbesondere wenn empfindliche Stückgüter mit hoher Geschwindigkeit transportiert werden sollen, nicht unproblematisch.
Das heißt, bei solchen Fördereinrichtungen besteht stets die Gefahr, daß die Stückgüter beim Überlaufen der Tragrollen mechanisch beaufschlagt werden, was nicht nur die Stückgüter beeinträchtigt, sondern auch die Tragrollen.
Außerdem verursacht das Anlaufen der Transportgüter an den Tragrollen einen nicht unerheblichen Lärmpegel.
Fördereinrichtungen mit durchgängigen stationären Unterstützungsauflagen sind daher für den Transport von empfindlichen Stückgütern in der Regel wesentlich vorteilhafter.
Diese Konstruktionen weisen allerdings ebenfalls verschiedene Nachteile auf.
Die großflächige Auflage der Unterseite des umlaufenden Transportgurtes auf den stationären Unterstützungsauflagen führt beispielsweise zu erheblichen Reibungsverlusten, was nur durch einen entsprechend groß dimensionierten und damit kostspieligen Antrieb kompensiert werden kann.
Bei diesen Fördereinrichtungen ist auch der Verschleiß, sowohl am Transportgurt als auch an den stationären Unterstützungsauflage, nicht unerheblich.
Das Schleifen des Transportgurtes an den stationären Unterstützungsauflagen erzeugt außerdem, insbesondere bei schnellaufenden Anlagen, eine Geräuschkulisse, die als störend empfunden wird.

Zur Verminderung der Reibung derartig großflächig abgestützter Transportgurte oder Transportbänder sind daher in der Vergangenheit bereits verschiedene Versuche unternommen worden.

In der DE-OS 26 38 012 ist beispielsweise eine Fördereinrichtung für Schüttgut beschrieben, bei der das Obertrum des Fördergurtes an der Beladestelle durch ein Tragband unterstützt wird, welches in einer Mulde auf einem Luftpolster gleitet.

Der Fördergurt ist auch im weiteren Streckenverlauf durch ähnliche Tragbänder unterstützt, die entweder einen eigenen Antrieb aufweisen oder vom Fördergurt über Reibschluß mitgenommen werden. Auch die im mittleren Streckenverlauf dieser Fördereinrichtung angeordneten Tragbänder gleiten dabei auf einem Luftpolster.

Des weiteren ist zum Beispiel durch die DE-OS 25 40 483 eine Fördereinrichtung bekannt, deren Fördergurt auf weiten Teilen der Förderstrecke durch eine mitlaufende Unterkonstruktion abgestützt wird.
Diese Unterkonstruktion besteht dabei aus muldenartigen, auf Fahrwerken befestigten Stützbügeln. Die Fahrwerke, die auf Schienen verfahrbar angeordnet sind, sind an ihren Außenseiten über Drahtseile, verbunden, die ihrerseits über entsprechende Umlenkrollen geführt sind.
Während des Förderbetriebes nimmt der angetriebene Fördergurt die endlos umlaufende Unterkonstruktion über Reibschluß mit.

In der DE 297 01 963U ist beispielsweise eine Förderanlage bekannt, in dem der Transportgurt über einen mitlaufenden Untergurt abgestützt ist.

Die vorbeschriebenen, für die Schüttgutförderung konzipierten Fördereinrichtungen konnten sich in der Praxis, insbesondere zur Förderung von Stückgütern, allerdings nicht durchsetzen.

Bei Fördereinrichtungen, wie sie durch die DE-OS 26 38 012 bekannt sind, ist beispielsweise, wenn nicht aufwendige Abdichtmaßnahmen eingeleitet werden, der Energiebedarf beträchlich.
Die Fördereinrichtung gemäß DE-OS 25 40 483 ist sehr aufwendig und damit kostspielig, außerdem ist diese Konstruktion für schnellaufende Fördereinrichtungen nur sehr bedingt geeignet.

Ausgehend vom vorgenannten Stand der Technik liegt der Erfindung die Aufgabe zugrunde, eine Fördereinrichtung, insbesondere für Stückgüter, zu schaffen, die, bei schonendem Umgang mit den Transportgütern, eine hohe Durchsatzleistung aufweist sowie kostengünstig im Betrieb ist. Außerdem sollten sich die Laufgeräusche der erfindungsgemäßen Anlage auf einem deutlich reduzierten Niveau befinden.

Diese Aufgabe wird erfindungsgemäß durch eine Fördereinrichtung gelöst, wie sie im Anspruch 1 beschrieben ist.

Vorteilhafte Ausgestaltungen der Erfindung sind Gegenstand der Unteransprüche.

Die erfindungsgemäße Ausführungsform einer Fördereinrichtung mit wenigstens drei übereinander angeordneten, gurtartigen Elementen weist gegenüber den bekannten Fördereinrichtungen insbesondere den Vorteil auf, daß durch die Anordnung eines zweiten Untergurtes, der auf einer stationären Unterstützungsauflage gleitet und dabei vorzugsweise nur die halbe Umlaufgeschwindigkeit des Transportgurtes aufweist, nicht nur die Geräuschentwicklung der Fördereinrichtung drastisch reduziert werden konnte sondern auch der Abrieb im Bereich der umlaufenden Gurtelemente bzw. der Unterstützungsauflage.
Das heißt, die erfindungsgemäße Ausbildung bietet jetzt die Möglichkeit, lange, schnellaufende Födereinrichtungen zu bauen, bei denen sich während des Betriebes sowohl der Verschleiß als auch der Geräuschpegel in einem durchaus erträglichen Rahmen hält.

In bevorzugter Ausgestaltung ist der Transportgurt dabei, wie im Anspruch 2 dargelegt, als Zahnriemen ausgebildet, dessen unterseitige Verzahnung mit einer entsprechenden Verzahnung einer Antriebsrolle kämmt.

Derartige Zahnriemen ermöglichen auf relativ einfache Weise die Übertragung hoher Zugkräfte, so daß die einzelnen Sektionen der Transporteinrichtung relativ lang ausgebildet sein. Die Zahnriemen müssen dabei aufgrund ihrer formschlüssigen Kraftübertragung auch nicht übermäßig gespannt werden, was sich sehr positiv auf die Lagerung der Umlenkbeziehungsweise Antriebsrollen auswirkt.

Durch eine V-förmige Verzahnung des Transportgurtes auf seiner Unterseite (Anspruch 3), wird außerdem eine zuverlässige Zentrierung des Transportgurtes bezüglich der Antriebsrolle realisiert.
Das heißt, die V-förmige Verzahnung des Transportgurtes verhindert, insbesondere in Verbindung mit entsprechenden Verzahnungen auf der Antriebs- beziehungsweise Umlenkrolle, zuverlässig, daß der Transportgurt während des Betriebes seitlich auswandert und dabei an Führungsleisten seiner Stützkonstruktion anläuft. Ein solches Anlaufen des Transportgurtes würde bereits nach kurzer Zeit zu einer Beschädigung des Transportgurtes führen.

Wie im Anspruch 4 beschrieben, ist in einer vorteilhaften Ausführungsform im Bereich der Verzahnung des Transportgurtes außerdem eine durchgehende Führungsnut vorgesehen.
In diese Führungsnut greift, wie in Anspruch 6 dargelegt, ein am ersten Untergurtes angeordneter, dessen Oberseite überragender Führungssteg ein.

Der in die Führungsnut des Transportgurtes eingreifende Führungssteg des ersten Untergurtes sorgt dabei dafür, daß auch der erste Untergurt, der, wie im Anspruch 5 dargelegt, vorteilhafterweise als kostengünstiger Flachriemen ausgebildet ist und vom Transportgurt über Reibschluß mitgenommen wird, exakt ausgerichtet über seine Umlenkrollen läuft.
Das heißt, der in der Führungsnut des Transportgurtes positionierte Führungssteg stellt sicher, daß auch der schnell umlaufende erste Untergurt während des Betriebes nicht an seitlichen Begrenzungen anlaufen kann.

Vorzugsweise ist der erste Untergurt auf weiten Teilen seiner Transportstrecke, wie im Anspruch 7 dargelegt, auf einem zweiten Untergurt gleitend abgestützt.
Der zweite Untergurt weist dabei, wie im Anspruch 8 beschrieben, eine Umlaufgeschwindigkeit auf, die deutlich unter der Umlaufgeschwindigkeit des Transportgurtes beziehungsweise des vom Transportgurt mitgeschleppten ersten Untergurtes liegt. Die relativ niedrige Umlaufgeschwindigkeit des zweiten Untergurtes, die vorzugsweise lediglich 50 % der Umlaufgeschwindigkeit des Transportgurtes beträgt, führt dazu, daß auch die Relativgeschwindigkeiten zwischen den einzelnen Gleitflächen der Gurtelemente beziehungsweise der stationären Unterstützungsauflage entsprechend gesenkt werden, was sich sowohl auf den Verschleiß der Gurtelemente als auch auf die Geräuschentwicklung der erfindungsgemäßen Transporteinrichtung positiv auswirkt.

In vorteilhafter Ausführungsform (Anspruch 9) ist vorgesehen, daß der zweite Untergurt über eine Getriebeanordnung mit dem Antrieb des Transportgurtes verbunden ist.

Eine solche Konstuktion ermöglicht es, alle gurtartigen Elemente der Transporteinrichtung mittels eines einzigen Antriebes zu beaufschlagen.

In alternativer Ausführungsform, die im Anspruch 10 dargelegt ist, kann der zweite Untergurt allerdings auch durch einen separaten Antrieb beaufschlagt werden.
Ein solcher separater Antrieb kann beispielsweise über einen Frequenzumrichter angesteuert sein, so daß die Umlaufgeschwindigkeit des zweiten Untergurtes veränderbar und somit optimal an die gegebenen Transportbedingungen anpaßbar ist.

Um die Reibungsverluste im Bereich der Gleitflächen zu minimieren, ist es außerdem vorteilhaft, wenn der zweite Untergurt wenigstens eine reibungsarme Oberseite aufweist. Die reibungsarme Oberseite des zweiten Untergurtes korrespondiert dabei mit der Unterseite des ersten Untergurtes, die vorzugsweise ebenfalls eine reibungsarme Oberfläche besitzt (Anspruch 11).

Mit seiner Unterseite gleitet der zweite Untergurt außerdem auf einer stationären Unterstützungsauflage. Diese stationäre Unterstützungsauflage ist wie im Anspruch 12 beschrieben, vorzugsweise als Lochblech ausgebildet.

Bei entsprechenden Versuchen hat sich herausgestellt, daß eine solche als Lochblech ausgebildete Unterstützungsauflage gegenüber einer geschlossenen Unterstützungsauflage zu einer erheblichen Verminderung des Laufgeräusches des zweiten Untergurtes führt.

Eine weitere Verbesserung sowohl des Laufverhaltens des zweiten Untergurtes als auch der Haltbarkeit des Untergurtes sowie der Unterstützungsauflage ergibt sich, wenn das Lochblech, wie im Anspruch 13 beschrieben, aus Edelstahl gefertigt ist und damit eine sehr glatte Oberfläche aufweist oder, wenn das Lochblech, wie im Anspruch 14 beschrieben, mit einer Kunststoffauflage, beispielsweise aus Teflon®, beschichtet ist.

Weitere Einzelheiten der Erfindung sind einem nachfolgend anhand der Zeichnungen erläuterten Ausführungsbeispiel entnehmbar.

Es zeigt:
- Fig. 1: eine Sektion einer erfindungsgemäßen Fördereinrichtung in Draufsicht,
- Fig. 2: die Fördereinrichtung gemäß Fig. 1 in Seitenansicht,
- Fig. 3: eine Vorderansicht der gurtartigen Elemente, gemäß Schnitt III-III der Fig. 2,
- Fig. 4: eine Ansicht auf die Unterseite des Transportgurtes,
- Fig. 5: eine alternative Anordnung der Antriebsrollen des Transportgurtes,
- Fig. 6: eine alternative Anordnung der Umlenkrollen des ersten Untergurtes.

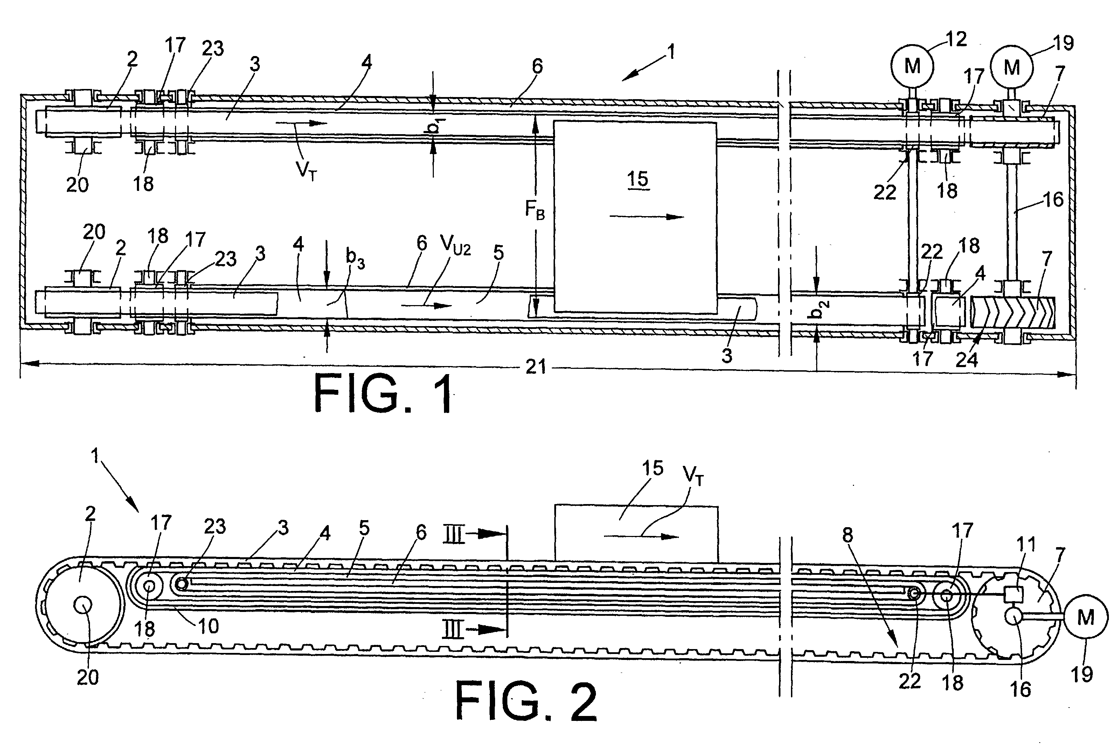

Die Figur 1 zeigt schematisch eine Draufsicht auf eine Sektion 21 einer erfindungsgemäßen Fördereinrichtung 1. Eine solche Fördereinrichtung 1 kann aus zahlreichen derartigen Sektionen 21 bestehen und dabei eine beträchtliche Länge erreichen.

Wie aus den Figuren 1 und 2 ersichtlich, weist jede Sektion 21 einer solchen Fördereinrichtung 1, vorzugsweise paarweise angeordnet, jeweils drei übereinander liegende Gurtelemente 3, 4 und 5 auf. Das oben liegende Gurtelement bildet dabei einen Transportgurt 3 und ist in bevorzugter Ausführungsform als Zahnriemen ausgebildet. Dieser endlose Transportgurt 3 läuft über endseitig angeordnete Antriebsrollen 7 beziehungsweise über Umlenkrollen 2.
Die Antriebsrollen 7 sind dabei mit einem entsprechenden Antrieb 19 verbunden und weisen eine auf die Verzahnung 8 des Transportgurtes 3 abgestimmte Verzahnung 24 auf.

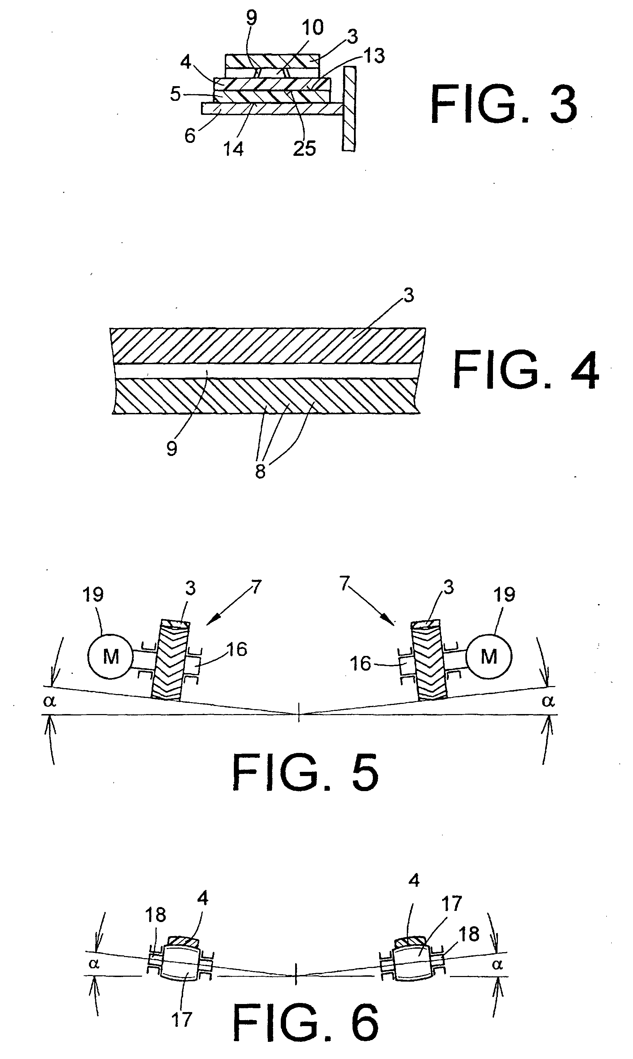

Wie insbesondere aus Figur 4 ersichtlich, ist Verzahnung 8 des Zahnriemens 3 V-förmig ausgebildet und weist eine vorzugsweise mittig angeordnete Führungsnut 9 auf.

Der Transportgurt 3 liegt auf weiten Teilen der Transportstrecke mit seiner Verzahnung 8 verschleißfrei auf einem sogenannten ersten Untergurt 4 auf, den er über Reibschluß mitnimmt.

Der ebenfalls endlose Untergurt 4 läuft endseitig jeweils über vorzugsweise ballig ausgebildete Umlenkrollen 17.
In bevorzugter Ausführungsform ist der Untergurt 4 als kostengünstiger Flachriemen ausgebildet, der im Bereich seiner Oberseite außerdem einen Führungssteg 10 aufweisen kann.

Dieser Führungssteg 10 greift in die Führungsnut 9 des Transportgurtes 3 ein, so daß der erste Untergurt 4 bezüglich des Transportgurtes 3 stets exakt ausgerichtet ist.
Da der Transportgurt 4 des weiteren auf seiner Oberseite relativ griffig ausgebildet ist, wird er vom Transportgurt 3 über Reibschluß nahezu schlupffrei mitgenommen.
Die Unterseite 25, mit der der erste Untergurt 4 auf einem weiteren, sogenannten zweiten Untergurt 5 gleitet, ist dagegen möglichst glatt ausgebildet, das heißt, möglichst reibungsarm.

Der zweite Untergurt 5 ist ebenfalls endlos ausgebildet und läuft über endseitig angeordnete Antriebsrollen 22 beziehungsweise Umlenkrollen 23.
Die Antriebsrollen 22 sind dabei entweder über ein Getriebe 11 mit dem Antrieb 19 des Transportgurtes 3 verbunden oder verfügen über einen eigenen, separaten Antrieb 12.

Der zweite Untergurt 5 liegt mit seiner Unterseite 14 auf einer relativ großflächigen Unterstützungsauflage 6 auf und gleitet auf dieser stationären Unterstützungsauflage 6 mit einer Umlaufgeschwindigkeit V_{U2}, die deutlich unter der Umlaufgeschwindigkeit V_{T} des Transportgurtes 3 bzw. des ersten Untergurtes 4 liegt.

Wenigstens die Oberseite 13 des zweiten Untergurtes 5 ist reibungsarm ausgebildet, so daß der erste und zweite Untergurt ohne größere Reibungsverluste aneinander vorbeigleiten können.

Um die Reibungsverluste der Fördereinrichtung 1 weiter zu minimieren, ist außerdem vorgesehen, daß die Unterstützungsauflage 6 aus glattflächigem, verschleißfestem Edelstahl, zum Beispiel V2A, hergestellt ist.

In einer alternativen Ausführungsform kann jedoch auch vorgesehen sein, die Unterstützungsauflage 6 mit einer Kunststoffbeschichtung zu versehen. Als geeignete Beschichtung hat sich dabei eine Teflon® -Beschichtung herausgestellt.

Die Unterstützungsauflage 6 ist vorzugsweise als Lochblech ausgebildet, da durch den Einsatz eines Lochbleches der Lärmpegel der erfindungsgemäßen Fördereinrichtung 1, insbesondere das Laufgeräusch des zweiten Untergurtes 5, deutlich senken läßt.

In weiterer Ausgestaltung der Erfindung können die Achsen der Umlenkrollen beziehungsweise die Achsen der Antriebsrollen der einzelner Gurtelemente einen sogenannten negativen Sturz aufweisen.
Ein solcher negativer Sturz der Achsen, das heißt, ein Neigen der Achsen nach innen, führt automatisch zu einer Zentrierung eines auf den Transportgurten 3 liegenden Stückgutes 15.

In Figur 5 sind Antriebsrollen 7 für die Transportgurte 3 dargestellt, deren Achsen 16 jeweils um einen Winkel α nach innen geneigt sind.

Die Figur 6 zeigt eine entsprechende Darstellung am Beispiel von vorzugsweise balligen Umlenkrollen 17, auf denen der Untergurt 4 umläuft.

### Funktion der Einrichtung:

Zur Inbetriebnahme der Fördereinrichtung 1 werden die Antriebe 12 und 19 eingeschaltet.

Der Antrieb 19 sorgt über die Antriebsrollen 7 dafür, daß die Transportgurte 3 in Richtung des Pfeiles V_{T} beschleunigt werden und schließlich eine Umlaufgeschwindigkeit V_{T} aufweisen.

Die umlaufenden Transportgurte 3, die mit ihren Unterseiten, die jeweils eine Verzahnung 8 aufweist, auf einem ersten Untergurt 4 aufliegen, nehmen diese über Reibschluß mit.

Das heißt, die ersten Untergurte 4 laufen mit nahezu gleicher Geschwindigkeit (V_{T}) wie die Transportgurte 3 um.
Die ersten Untergurte 4 gleiten ihrerseits mit ihrer relativ glatten Unterseite 25 auf den ebenfalls glatten Oberseiten 13 der zweiten Untergurte 5.
Diese zweiten Untergurte 5, die vorzugsweise über Antriebsräder 22 beziehungsweise einen Antrieb 12 beaufschlagt werden, laufen mit einer Umlaufgeschwindigkeit V_{U2}, die deutlich unterhalb der Umlaufgeschwindigkeit V_{T} des Transportgurtes 3 liegt, um.
Das bedeutet, der zweite Untergurt 5 bewegt sich zwar sowohl relativ zum ersten Untergurt 4 als auch relativ zu den stationären Unterstützungsauflagen 6, jedoch mit deutlich geringerer Relativgeschwindigkeit.

## Patentansprüche

1. Fördereinrichtung mit wenigstens einem über Antriebs (7)- bzw. Umlenkrollen (2) geführten Transportgurt (3), wobei der Transportgurt zumindest teilweise über wenigstens einen mitlaufenden Untergurt (4) abgestützt ist,
**dadurch gekennzeichnet,**
**daß** die Fördereinrichtung (1) wenigstens drei übereinander angeordnete, gurtartige Elemente (3, 4, 5) aufweist, wobei zumindest ein zweiter Untergurt (5), der auf einer stationären Unterstützungsauflage (6) gleitet, eine niedrigere Umlautgeschwindigkeit als der Transportgurt (3) aufweist.

2. Fördereinrichtung nach Anspruch 1, **dadurch gekennzeichnet, daß** der Transportgurt (3) als Zahnriemen ausgebildet ist, dessen Verzahnung (8) mit einer entsprechenden Verzahnung (24) der Antriebsrolle (7) kämmt.

3. Fördereinrichtung nach einem der vorherigen Ansprüche, **dadurch gekennzeichnet, daß** der Zahnriemen (3) eine V-förmige Verzahnung (8) aufweist.

4. Fördereinrichtung nach einem der vorherigen Ansprüche, **dadurch gekennzeichnet, daß** im Bereich der Verzahnung (8) des Transportgurtes (3) eine, vorzugsweise mittig angeordnete, Führungsnut (9) angeordnet ist.

5. Fördereinrichtung nach einem der vorherigen Ansprüche, **dadurch gekennzeichnet, daß** der angetriebene Transportgurt (3) einen ersten Untergurt (4), der vorzugsweise als kostengünstiger Flachriemen ausgebildet ist, über Reibschluß mitnimmt.

6. Fördereinrichtung nach einem der vorherigen Ansprüche, **dadurch gekennzeichnet, daß** der erste Untergurt (4) einen oben liegenden Führungssteg (10) aufweist, der in die mittig angeordnete Führungsnut (9) des Transportgurtes (3) eingreift.

7. Fördereinrichtung nach einem der vorherigen Ansprüche, **dadurch gekennzeichnet, daß** der erste Untergurt (4) auf dem zweiten Untergurt (5) gleitend abgestützt ist.

8. Fördereinrichtung nach einem der vorherigen Ansprüche, **dadurch gekennzeichnet, daß** der zweite Untergurt (5) mit einer Umlaufgeschwindigkeit (V_{U2}) angetrieben wird, die 10 bis 90 %, vorzugsweise 50 %, unter der Umlaufgeschwindigkeit (V_{T}) des Transportgurtes (3) liegt.

9. Fördereinrichtung nach einem der vorherigen Ansprüche, **dadurch gekennzeichnet, daß** der zweite Untergurt (5) über eine entsprechende Getriebeanordnung (11) mit dem Antrieb (19) des Transportgurtes (3) verbunden ist.

10. Fördereinrichtung nach einem der vorherigen Ansprüche, **dadurch gekennzeichnet, daß** der zweite Untergurt (5) einen separaten Antrieb (12) aufweist.

11. Fördereinrichtung nach einem der vorherigen Ansprüche, **dadurch gekennzeichnet, daß** der zweite Untergurt (5) wenigstens im Bereich seiner Oberfläche (13) eine die Reibung herabsetzende Beschichtung besitzt.

12. Fördereinrichtung nach einem der vorherigen Ansprüche, **dadurch gekennzeichnet, daß** der zweite Untergurt (5) auf einer Unterstützungsauflage (6) gleitet, die als Lochblech ausgebildet ist.

13. Fördereinrichtung nach Anspruch 12, **dadurch gekennzeichnet, daß** das Lochblech (6) aus Edelstahl gefertigt ist.

14. Fördereinrichtung nach Anspruch 12, **dadurch gekennzeichnet, daß** das Lochblech (6) mit einer sehr gleitfähigen Kunststoffauflage, beispielsweise aus Teflon®, beschichtet ist.

15. Fördereinrichtung nach Anspruch 1, **dadurch gekennzeichnet, daß** die gurtartigen Elemente (3, 4, 5) pro Sektion (21) der Fördereinrichtung (1) jeweils paarweise angeordnet sind und dabei eine Breite (b3, b4, b5) aufweisen, die deutlich unterhalb der Förderbreite (FB) der Fördereinrichtung (1) liegt.

16. Fördereinrichtung nach einem der vorherigen Ansprüche, **dadurch gekennzeichnet, daß** die Transportgurte (3) auf Antriebsrollen (7) beziehungsweise Umlenkrollen (2) laufen, deren Achsen (16, 20) einen negativen Sturz aufweisen.

17. Fördereinrichtung nach einem der vorherigen Ansprüche, **dadurch gekennzeichnet, daß** die paarweise angeordneten ersten Untergurte (4) auf balligen Umlenkrollen (17) laufen.

18. Fördereinrichtung nach Anspruch 17, **dadurch gekennzeichnet, daß** die Achsen (18) der balligen Umlenkrollen (17) einen negativen Sturz aufweisen.

## Claims

1. Conveying device with at least one conveyor belt (3) guided via driving rollers (7) and deflection rollers (2), the conveyor belt being supported at least partially by at least one rotating lower belt (4), **characterised in that** the conveying device (1) comprises at least three belt-like elements (3, 4, 5) arranged one above the other, wherein at least one second lower belt (5), which slides on a stationary support (6), has a lower rotational speed than the conveyor belt (3).

2. Conveying device according to claim 1, **characterised in that** the conveyor belt (3) is designed as a toothed belt, of which the teeth (8) mesh with corresponding teeth (24) of the driving roller (7).

3. Conveying device according to any of the preceding claims, **characterised in that** the toothed belt (3) comprises V-shaped teeth (8).

4. Conveying device according to any of the preceding claims, **characterised in that** a guide groove (9), preferably arranged centrally, is arranged in the region of the teeth (8) of the conveyor belt (3).

5. Conveying device according to any of the preceding claims, **characterised in that** the driven conveyor belt (3) entrains via friction grip, a first lower belt (4), preferably configured as an inexpensive flat belt.

6. Conveying device according to any of the preceding claims, **characterised in that** the lower belt (4) comprises an upper guide web (10) engaging in the centrally arranged guide groove (9) of the conveyor belt (3).

7. Conveying device according to any of the preceding claims, **characterised in that** the first lower belt (4) is slidingly supported on the second lower belt (5).

8. Conveying device according to any of the preceding claims, **characterised in that** the second lower belt (5) is driven at a rotational speed (Vᵤ₂) which is 10 to 90%, preferably 50%, below the rotational speed (V_{T}) of the conveyor belt (3).

9. Conveying device according to any of the preceding claims, **characterised in that** the second lower belt (5) is connected via a corresponding gear arrangement (11) to the drive (19) of the conveyor belt (3).

10. Conveying device according to any of the preceding claims, **characterised in that** the second lower belt (5) comprises a separate drive (12).

11. Conveying device according to any of the preceding claims, **characterised in that** the second lower belt (5) has, at least in the region of its surface (13), a friction-reducing coating.

12. Conveying device according to any of the preceding claims, **characterised in that** the second lower belt (5) glides on a support (6) designed as a perforated plate.

13. Conveying device according to claim 12, **characterised in that** the perforated plate (6) is manufactured from stainless steel.

14. Conveying device according to claim 12, **characterised in that** the perforated plate (6) is coated with a very slideable plastics coating, for example consisting of Teflon®.

15. Conveying device according to claim 1, **characterised in that** the belt-like elements (3, 4, 5) are each arranged in pairs per section (21) of the conveying device (1) and have a width (b3, b4, b5) clearly below the conveying width (FB) of the conveying device (1).

16. Conveying device according to any of the preceding claims, **characterised in that** the conveyor belts (3) run on driving rollers (7) and deflection rollers (2), of which the axes (16, 20) have a negative drop.

17. Conveying device according to any of the preceding claims, **characterised in that** the first lower belts (4) arranged in pairs run on crowned deflection rollers (17).

18. Conveying device according to claim 17, **characterised in that** the axes (18) of the crowned deflection rollers (17) have a negative drop.

## Revendications

1. Dispositif de transport comprenant au moins une courroie de transport (3) guidée par des poulies d'entraînement (7) et des poulies de renvoi (2), la courroie de transport étant au moins en partie supportée par au moins une courroie inférieure (4) entraînée en mouvement, **caractérisé en ce que** le dispositif de transport (1) comporte au moins trois éléments (3, 4, 5) en forme de courroie superposés, sachant qu'au moins une deuxième courroie inférieure (5), qui glisse sur une surface de support (6) immobile, se déplace avec une vitesse inférieure à celle de la courroie de transport (3).

2. Dispositif de transport selon la revendication 1, **caractérisé en ce que** la courroie de transport (3) est conçue sous forme de courroie dentée, dont la denture (8) engrène avec une denture (24) correspondante de la poulie d'entraînement (7).

3. Dispositif de transport selon une quelconque des revendications précédentes, **caractérisé en ce que** la courroie dentée (3) comporte une denture (8) en forme de V.

4. Dispositif de transport selon une quelconque des revendications précédentes, **caractérisé en ce que** dans la zone de la denture (8) de la courroie de transport (3) est réalisée une rainure de guidage (9), agencée de préférence au milieu.

5. Dispositif de transport selon une quelconque des revendications précédentes, **caractérisé en ce que** la courroie de transport (3) entraînée entraîne par friction une première courroie inférieure (4) qui est conçue de préférence sous forme de courroie plane peu coûteuse.

6. Dispositif de transport selon une quelconque des revendications précédentes, **caractérisé en ce que** la première courroie inférieure (4) est munie d'une nervure de guidage (10) supérieure qui s'engage dans la rainure de guidage (9) agencée au milieu de la courroie de transport (3).

7. Dispositif de transport selon une quelconque des revendications précédentes, **caractérisé en ce que** la première courroie inférieure (4) est en appui par glissement sur la deuxième courroie inférieure (5).

8. Dispositif de transport selon une quelconque des revendications précédentes, **caractérisé en ce que** la deuxième courroie inférieure (5) est actionnée avec une vitesse de rotation (V_{U2}), qui est 10 à 90 %, de préférence 50 % inférieure à la vitesse de rotation (V_{T}) de la courroie de transport (3).

9. Dispositif de transport selon une quelconque des revendications précédentes, **caractérisé en ce que** la deuxième courroie inférieure (5) est reliée au moteur (19) de la courroie de transport (3) par l'intermédiaire d'un mécanisme de transmission (11) correspondant.

10. Dispositif de transport selon une quelconque des revendications précédentes, **caractérisé en ce que** la deuxième courroie inférieure (5) comporte un moteur (12) séparé.

11. Dispositif de transport selon une quelconque des revendications précédentes, **caractérisé en ce que** la deuxième courroie inférieure (5) est munie au moins dans la zone de sa surface (13) d'un revêtement diminuant le frottement.

12. Dispositif de transport selon une quelconque des revendications précédentes, **caractérisé en ce que** la deuxième courroie inférieure (5) se déplace sur une surface de support (6) qui est conçue sous forme de tôle perforée.

13. Dispositif de transport selon la revendication 12, **caractérisé en ce que** la tôle perforée (6) est réalisée en acier fin.

14. Dispositif de transport selon la revendication 12, **caractérisé en ce que** la tôle perforée (6) est revêtue d'une couche de matière plastique, telle que le téflon®, favorisant nettement le glissement.

15. Dispositif de transport selon la revendication 1, **caractérisé en ce que** les éléments (3, 4, 5) en forme de courroie sont agencés respectivement par paires dans chaque section (21) du dispositif de transport (1) et ont à cet effet une largeur (b3, b4, b5), qui est nettement inférieure à la largeur de transport (FB) du dispositif de transport (1).

16. Dispositif de transport selon une quelconque des revendications précédentes, **caractérisé en ce que** la courroie de transport (3) est guidée sur des poulies d'entraînement (7) et des poulies de renvoi (2), dont les axes (16, 20) présentent une déclivité négative.

17. Dispositif de transport selon une quelconque des revendications précédentes, **caractérisé en ce que** les premières courroies inférieures (4) agencées par paire se déplacent sur des poulies de renvoi (17) convexes.

18. Dispositif de transport selon la revendication 17, **caractérisé en ce que** les axes (18) des poulies de renvoi (17) convexes présentent une déclivité négative.
